(19) Europäisches Patentamt / European Patent Office / Office européen des brevets

(11) **EP 2 937 283 B1**

(12) **EUROPEAN PATENT SPECIFICATION**

(45) Date of publication and mention
of the grant of the patent:
**28.11.2018   Bulletin 2018/48**

(51) Int Cl.:
**B64C 27/57** (2006.01)    **B64C 13/10** (2006.01)
**B64D 43/00** (2006.01)    **B64D 45/00** (2006.01)
**G05D 1/06** (2006.01)    **G05D 1/08** (2006.01)

(21) Application number: **15156097.6**

(22) Date of filing: **23.02.2015**

(54) **Vertical axis soft landing control**

Steuerung mit vertikaler Achse zur weichen Landung

Commande d'atterrissage en douceur à axe vertical

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2014   US 201414259198**

(43) Date of publication of application:
**28.10.2015   Bulletin 2015/44**

(60) Divisional application:
**17190585.4 / 3 293 114**

(73) Proprietor: **Sikorsky Aircraft Corporation
Stratford, CT 06615 (US)**

(72) Inventors:
• **Litwinowicz, Anthony
  Derby, CT Connecticut 06418 (US)**
• **Sahasrabudhe, Vineet
  Cheshire, CT Connecticut 06410 (US)**
• **Faynberg, Alex
  Cheshire, CT Connecticut 06410 (US)**
• **Knag, John
  New Boston, NH New Hampshire 03070 (US)**
• **Fell, William
  Palm City, FL Florida 34990 (US)**

(74) Representative: **Schmitt-Nilson Schraud Waibel
Wohlfrom
Patentanwälte Partnerschaft mbB
Destouchesstraße 68
80796 München (DE)**

(56) References cited:
**US-A- 3 947 809        US-A1- 2005 151 672
US-A1- 2006 071 817    US-A1- 2009 266 940
US-A1- 2011 202 207    US-B1- 7 422 497**

## Description

An aircraft, such as a rotorcraft, may be susceptible to hard landings when flying in configurations that are heavier than the basic design gross weight (BDGW) configuration. A hard landing may be detected by one or more systems and may be triggered by excessive acceleration for a given configuration. Detection of a hard landing may trigger a maintenance action for the aircraft, reducing operational durability.

Additionally, diminished visual environment (DVE) conditions are known to increase pilot workload. For example, a pilot may have to land an aircraft using only instrument readings. Aircraft operations in DVE conditions (e.g., brownout, whiteout, dark nights) are inherently dangerous due to the inability of the pilot to see obstacles and/or the ground. While some information is available through sensors, such as downward looking radars and thermal imagining or infrared systems, these technologies increase pilot workload and further divide the pilot's attention between multiple displays that need constant monitoring.

US 2006/071817 shows a tactile warning system for warning a helicopter pilot of a pre-selected altitude during a landing maneuver includes a collective control arm for control of the aircraft and a tactile warning device operatively connected to the collective control arm. The system includes a radio altimeter for sensing the actual altitude, a computer and keyboard for inputting a pre-selected height above the ground into the computer memory. A signal generator generates a signal indicative of the actual altitude as the aircraft approaches the ground. Then, when the actual altitude is equal to or less then the pre-selected altitude the system activates the tactile device. The warning system indicative of reaching a pre-selected height is also combined with a tactile warning system for avoiding "hot starts" and for avoiding other dangerous conditions.

US 2009/266940 shows a method and apparatus for a split detent tactile cueing control system comprising an inceptor, a position sensor, vehicle sensors, and a flight control computer. The inceptor can be moved into different positions measured by a position sensor. The vehicle sensors generate signals in response to detecting parameters about a vehicle during a flight. The flight control computer is coupled to the inceptor and the vehicle sensors. The flight control computer is capable of generating actuation signals used to generate tactile cues to generate a flight path hold detent and an altitude hold detent within the plurality of positions using a force feel profile and the parameters. An extension of a latch force from the flight path hold detent to the altitude hold detent is present during changes in vehicle direction.

US 2011/202207 shows a device comprising means for generating and applying to an aircraft protecting orders avoiding a flight with an excessive descent rate.

US 2005/151672 shows a method and apparatus for tactile cueing of aircraft controls is disclosed. The apparatus of the present invention warns pilots of approaching limits on certain aircraft performance parameters. The most common warnings are for rotor speed exceeding a moving limit. The present invention uses tactile cueing through the collective stick. Tactile cueing means that the pilot does not need to scan the instruments to ascertain proximity to the aforementioned limits. Instead, the pilot can operate the aircraft within proper limits by touch, while maintaining situational awareness outside of the cockpit. The method and apparatus of the present invention provides customary friction resistance up to a limit position that is continuously updated.

US 3 947 809 shows an aircraft warning system which measures the descent below a radio glideslope and compares it with the aircraft's altitude above ground to generate a warning when the descent below glideslope exceeds predefined limits for a particular altitude, circuitry is provided to generate an advisory warning above a predefined altitude and a hard warning, or command to take immediate action, below the predetermined altitude.

An embodiment is directed to a method comprising: obtaining data pertaining to at least: a rate of descent of an aircraft and a measured distance of the aircraft from at least one of an obstacle and the ground, processing, by a processing device, the data to obtain a flight envelope, generating a tactile cue corresponding to the flight envelope, and applying the tactile cue to an inceptor according to claim 1.

Particular embodiments may include any of the following optional features, alone or in combination:
The inceptor may be associated with one or more flight controls.

The inceptor may be associated with at least one of: a collective, a cyclic, and an anti-torque pedal.

The tactile cue may comprise at least one of a soft stop, a stick shaker, and a detent.

The data further may pertain to a measured weight of the aircraft.

The data further may pertain to at least one pilot command.

The tactile cue may be selected to encourage a pilot to operate the aircraft at an optimal point within the flight envelope.

The optimal point within the flight envelope may be selected to provide a soft landing of the aircraft.

The method of the invention additionally comprises determining, by a processing device, that the data indicates that the rate of descent exceeds a first threshold based on the measured distance being less than a second threshold; and automating a landing of the aircraft based on the determination.

An embodiment is directed to an apparatus comprising: at least one processor, and memory having instructions stored thereon that, when executed by the at least one processor, cause the apparatus to: obtain data pertaining to at least: a rate of descent of an aircraft and a measured distance of the aircraft from at least one of an obstacle and the ground, process the data to obtain a flight envelope, generate a tactile cue corresponding to the flight envelope, and apply the tactile cue to an inceptor. Particular embodiments may include any of the following optional features, alone or in combination: The inceptor may be associated with at least one of: a collective, a cyclic, and an anti-torque pedal.

The tactile cue may comprise at least one of a soft stop, a stick shaker, and a detent. The data further may pertain to a measured weight of the aircraft.

The data further may pertain to at least one pilot command.

The tactile cue may be selected to encourage a pilot to operate the aircraft at an optimal point within the flight envelope.

The optimal point within the flight envelope may be selected to provide a soft landing of the aircraft.

An embodiment is directed to an aircraft comprising: a first sensor configured to measure a distance of the aircraft from at least one of an object and the ground, a second sensor configured to measure a rate of descent of the aircraft, and a control system configured to: process the measured distance and the measured rate of descent to obtain a flight envelope, generate a tactile cue corresponding to the flight envelope, and apply the tactile cue to an inceptor.

Particular embodiments may include any of the following optional features, alone or in combination: The aircraft further may comprise a third sensor configured to measure a weight of the aircraft, wherein the control system is configured to process the measured weight in obtaining the flight envelope.

The inceptor may be associated with at least one of: a collective, a cyclic, and an anti-torque pedal.

The tactile cue may be selected to provide a soft landing of the aircraft.

Additionally a method is mentioned which comprises: obtaining data pertaining to at least: a rate of descent of an aircraft and a measured distance of the aircraft from at least one of an obstacle and the ground, determining, by a processing device, that the data indicates that the rate of descent exceeds a first threshold based on the measured distance being less than a second threshold, and automating a landing of the aircraft based on the determination.

Additional embodiments are described below.

The present disclosure is illustrated by way of example and not limited in the accompanying figures in which like reference numerals indicate similar elements.

FIG. 1A is a general perspective side view of an exemplary rotary wing aircraft;

FIG. IB is a schematic block diagram illustrating an exemplary computing system;

FIG. 2 is a block diagram of an exemplary system environment; and

FIG. 3 illustrates a flow chart of an exemplary method.

It is noted that various connections are set forth between elements in the following description and in the drawings (the contents of which are included in this disclosure by way of reference). It is noted that these connections in general and, unless specified otherwise, may be direct or indirect and that this specification is not intended to be limiting in this respect. In this respect, a coupling between entities may refer to either a direct or an indirect connection.

Exemplary embodiments of apparatuses, systems, and methods are described for providing a cue or indication to a pilot to land an aircraft (e.g., a rotorcraft) at a proper speed. In some embodiments, a landing may be automated to ensure a soft landing. A landing may be automated when a descent rate that exceeds a threshold has been commanded within a threshold distance of an object or the ground.

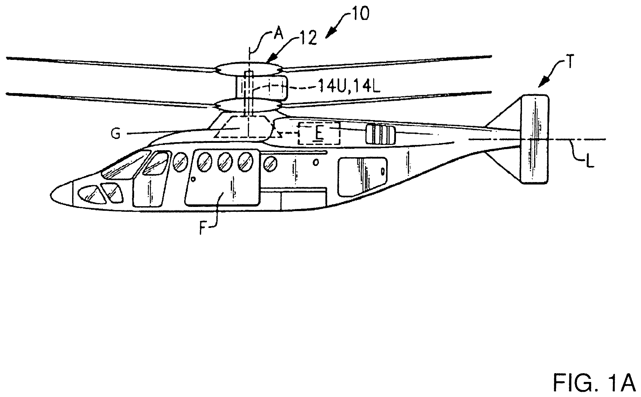

FIG. 1A illustrates an exemplary vertical takeoff and landing (VTOL) rotary wing aircraft 10. The aircraft 10 is shown as having a dual, counter-rotating main rotor system 12, which rotates about a rotating main rotor shaft 14U, and a counter-rotating main rotor shaft 14L, both about an axis of rotation A. Other types of configurations may be used in some embodiments, such as a single rotor system 12.

The aircraft 10 includes an airframe F which supports the main rotor system 12 as well as an optional translational thrust system T which provides translational thrust during high speed forward flight, generally parallel to an aircraft longitudinal axis L.

A main gearbox G located above the aircraft cabin drives the rotor system 12. The translational thrust system T may be driven by the same main gearbox G which drives the rotor system 12. The main gearbox G is driven by one or more engines E. As shown, the main gearbox G may be interposed between the engines E, the rotor system 12, and the translational thrust system T.

Although a particular counter-rotating, coaxial rotor system aircraft configuration is illustrated in the embodiment of FIG. 1A, other rotor systems and other aircraft types such as tilt-wing and tilt-rotor aircrafts may benefit from the present disclosure.

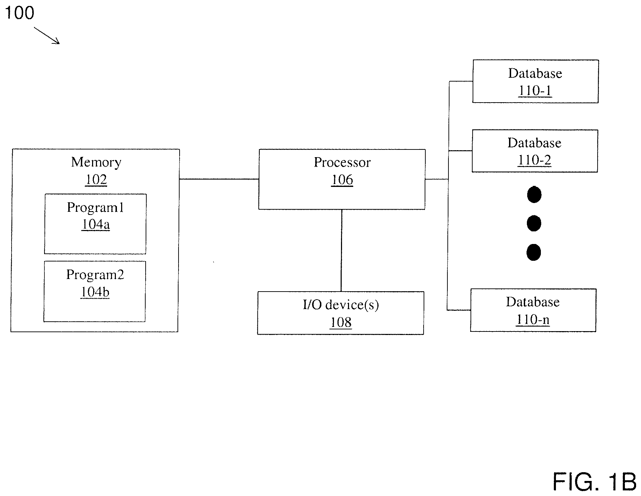

Referring to FIG. IB, an exemplary computing system 100 is shown. Computing system 100 may be part of a flight control system of the aircraft 10. The system 100 is shown as including a memory 102. The memory 102 may store executable instructions. The executable instructions may be stored or organized in any manner and at any level of abstraction, such as in connection with one or more applications, processes, routines, procedures, methods, etc. As an example, at least a portion of the instructions are shown in FIG. 1B as being associated with a first program 104a and a second program 104b.

The instructions stored in the memory 102 may be executed by one or more processors, such as a processor 106. The processor 106 may be coupled to one or more input/output (I/O) devices 108. In some embodiments, the I/O device(s) 108 may include one or more of a keyboard or keypad, a touchscreen or touch panel, a display screen, a microphone, a speaker, a mouse, a button, a remote control, a control stick, a joystick, a printer, a telephone or mobile device (e.g., a smartphone), a sensor, etc. The I/O device(s) 108 may be configured to provide an interface to allow a user to interact with the system 100.

As shown, the processor 106 may be coupled to a number 'n' of databases, 110-1, 110-2, ... 110-n. The databases 110 may be used to store data, such as data obtained from one or more sensors (e.g., accelerometers). In some embodiments, the data may pertain to an aircraft's measured altitude and sink rate.

The system 100 is illustrative. In some embodiments, one or more of the entities may be optional. In some embodiments, additional entities not shown may be included. In some embodiments, the entities may be arranged or organized in a manner different from what is shown in FIG. IB. For example, in some embodiments, the memory 102 may be coupled to or combined with one or more of the databases 110.

In some embodiments, a control system may use an aircraft's measured altitude and sink rate to institute limitations on the sink rate that can be commanded by the pilot when the aircraft is near an object or the ground. Through an analysis and evaluation of what sink rates correspond to hard landings, a maximum allowable decent profile can be generated. This profile can include a deceleration profile that allows for higher sink rates further from the ground.

In some embodiments, a deceleration profile may take the form:

$$v_i{}^2 = v_f{}^2 - 2ad,$$

where $v_i$ is the commanded sink rate, $v_f$ is the desired touchdown sink rate, d is the distance from the target altitude for the touchdown sink rate, and a is the desired deceleration.

In some embodiments, a profile may be used with varying deceleration. In some embodiments, the profile can be scheduled based on sensed or measured aircraft weight to allow for more aggressive profiles at lower weights, or more conservative profiles at higher weights.

In some embodiments, sensed velocities and positions and an onboard mathematical model of aircraft dynamics may be used to estimate collective and cyclic stick deflections to adhere to one or more profiles. The enforcement of these deflections may be accomplished through cues or indications, such as tactile cues or indications. For example, soft stops (where a pilot feels a force in connection with, e.g., a stick), stick shakers (where a pilot feels a vibration in connection with, e.g., a stick), and detents may be used as cues or indications.

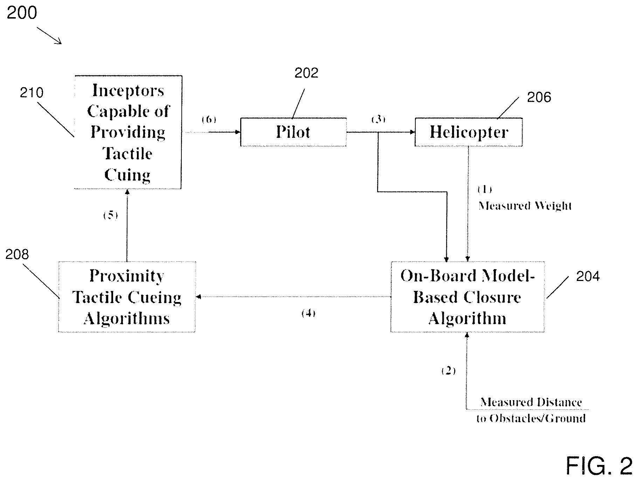

Turning now to FIG. 2, a block diagram of a system 200 in accordance with one or more embodiments is shown. The system 200 may be used to guide a pilot in operating (e.g., landing) an aircraft.

The system 200 may include a pilot 202 providing one or more commands (3) to a model-based algorithm 204. The algorithm 204 may be operative on the commands (3), potentially in combination with a measured weight (1) of an aircraft (e.g., helicopter 206) and a measured distance to obstacles or the ground (2). The algorithm 204 may generate a profile (4) based on one or more of the inputs (1)-(3). The profile (4) may correspond to an envelope that the helicopter 206 should operate within to provide for smooth operation (e.g., a soft landing), and may identify one or more optimal points or states of operation for doing so.

The profile (4) may be provided as input to one or more tactile cueing algorithms 208. The tactile cueing algorithms may generate one or more tactile cue commands (5) that may be used to direct an inceptor 210 to generate one or more tactile cues (6). A tactile cue (6) may be used to encourage the pilot to place one or more flight controls (e.g., collective, cyclic, anti-torque pedals, etc.) in a particular position or state, such that the aircraft operates within the profile (4).

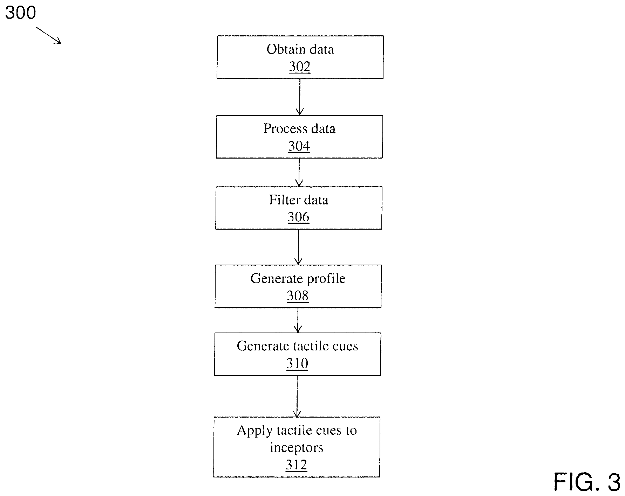

Turning now to FIG. 3, a flow chart of an exemplary method 300 is shown. The method 300 may be executed by one or more systems, components, or devices, such as those described herein (e.g., the system 100 and/or the system 200). The method 300 may be used to provide tactile cues to a pilot for operating an aircraft.

In block 302, data associated with the operation of the aircraft may be obtained. The data may pertain to one or more of: a measured weight of the aircraft, a measured distance between the aircraft and an obstacle or the ground, a rate of descent of the aircraft, and pilot commands. At least a portion of the data may be obtained from one or more sensors.

In block 304, the data of block 302 may be processed. For example, the data may be processed by the algorithm 204 of FIG. 2.

In block 306, the processed data of block 304 may be filtered. The filtering may be done to remove extraneous data, to reduce the impact of noise on one or more measurements, or to obtain a data profile that more closely mirrors or resembles the physical world.

In block 308, a profile may be generated. The profile may correspond to a flight envelope for one or more flight controls to provide for smooth operation (e.g., a soft landing) of the aircraft. The generated profile may be selected from memory or a database of profiles.

In block 310, one or more tactile cues may be generated. The tactile cues may be selected to encourage a pilot to operate the aircraft within the profile of block 308.

In block 312, the tactile cues may be applied to one or more inceptors (e.g., active inceptors).

The method 300 is illustrative. In some embodiments, one or more of the blocks or operations (or a portion thereof) may be optional. In some embodiments, the blocks or operations may execute in an order or sequence different from what is shown. In some embodiments, additional blocks or operations not shown may be included.

Embodiments of the disclosure may be used to reduce pilot workload in landing an aircraft. Tactile cues or indicators may assist a pilot in landing the aircraft, thereby allowing for spare capacity to perform other tasks. Safety may be improved, particularly in high workload landing zones. Maintenance actions resulting from hard landings may be reduced.

Embodiments may be implemented in connection with one or more control systems. In some embodiments, the control system may be implemented as one or more of a digital system and an analog system, potentially in connection with one or more of the components, devices, and/or systems described herein.

In some embodiments, aspects of the disclosure may be implemented in connection with a pre-existing platform. In this respect, aspects of the disclosure may serve as an "add-on" to a current or existing aircraft.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer-readable media, such as a transitory and/or non-transitory computer-readable medium. The instructions, when executed, may cause an entity (e.g., an apparatus or system) to perform one or more methodological acts as described herein.

**Claims**

1. A method (300) comprising:

   obtaining data pertaining to at least: a rate of descent of an aircraft and a measured distance of the aircraft from at least one of an obstacle and the ground;
   processing, by a processing device, the data to obtain a flight envelope;
   generating a tactile cue corresponding to the flight envelope;
   applying the tactile cue to an inceptor (210);
   **characterized in that** the method further comprises:

   determining, by a processing device, that the data indicates that the rate of descent exceeds a first threshold based on the measured distance being less than a second threshold; and
   automating a landing of the aircraft (10) based on the determination.

2. The method (300) according to claim 1, wherein the inceptor (210) is associated with one or more flight controls.

3. The method (300) according to claim 1 or 2, wherein the inceptor (210) is associated with at least one of: a collective, a cyclic, and an anti-torque pedal.

4. The method (300) according to any of claims 1 to 3, wherein the tactile cue comprises at least one of a soft stop, a stick shaker, and a detent.

5. The method (300) according to any of claims 1 to 4, wherein the data further pertains to a measured weight of the aircraft (10).

6. The method (300) according to any of claims 1 to 5, wherein the data further pertains to at least one pilot command.

7. The method (300) of any of claims 1 to 6, wherein the tactile cue is selected to encourage a pilot (202) to operate the aircraft (10) at an optimal point within the flight envelope.

8. The method (300) according to claim 7, wherein the optimal point within the flight envelope is selected to provide a soft landing of the aircraft (10).

9. An apparatus comprising:

   at least one processor (106); and
   memory (102) having instructions stored thereon that, when executed by the at least one processor (102), cause the apparatus to carry out a method comprising:

   - obtaining data pertaining to at least: a rate of descent of an aircraft and a measured distance of the aircraft from at least one of an obstacle and the ground;

- processing, by the at least one processor, the data to obtain a flight envelope;

- generating a tactile cue algorithm for generating a tactile cue command corresponding to the flight envelope for being applied to an inceptor (210);

- determining, by the at least one processor, that the data indicates that the rate of descent exceeds a first threshold based on the measured distance being less than a second threshold; and

- automating a landing of the aircraft (10) based on the determination.

10. An aircraft (10) comprising:

a first sensor configured to measure a distance of the aircraft (10) from at least one of an object and the ground;

a second sensor configured to measure a rate of descent of the aircraft (10); and

a control system comprising an apparatus according to claim 9.

11. The aircraft (10) of claim 10, further comprising:

a third sensor configured to measure a weight of the aircraft (10),

wherein the control system is configured to process the measured weight in obtaining the flight envelope.

12. The aircraft (10) of claim 10 or 11, wherein the inceptor (210) is associated with at least one of: a collective, a cyclic, and an anti-torque pedal.

13. The aircraft (10) of any of claims 10 to 12, wherein the tactile cue is selected to provide a soft landing of the aircraft (10).

**Patentansprüche**

1. Verfahren (300), umfassend:

Erhalten von Daten in Bezug auf mindestens: eine Sinkgeschwindigkeit eines Luftfahrzeugs und einen gemessenen Abstand des Luftfahrzeugs von mindestens einem aus einem Hindernis und der Erdoberfläche;

Verarbeiten der Daten mit einer Verarbeitungsvorrichtung, um eine Flugbereichsgrenze zu erhalten;

Erzeugen eines fühlbaren Hinweises, der der Flugbereichsgrenze entspricht;

Anwenden des fühlbaren Hinweises auf ein Steuerorgan (210);

**dadurch gekennzeichnet, dass** das Verfahren weiter Folgendes umfasst:

Feststellen durch eine Verarbeitungsvorrichtung, ob die Daten darauf hindeuten, dass die Sinkgeschwindigkeit einen ersten Grenzwert überschreitet, basierend darauf, dass der gemessene Abstand niedriger als ein zweiter Grenzwert ist; und

Automatisieren einer Landung des Luftfahrzeugs (10) basierend auf der Feststellung.

2. Verfahren (300) nach Anspruch 1, wobei das Steuerorgan (210) mit einer oder mehreren Flugsteuerungen verbunden ist.

3. Verfahren (300) nach Anspruch 1 oder 2, wobei das Steuerorgan (210) mit mindestens einem aus den folgenden Steuerorganen verbunden ist: einem kollektiven, einem zyklischen und einem Gegenmomentpedal-Steuerorgan.

4. Verfahren (300) nach einem der Ansprüche 1 bis 3, wobei der fühlbare Hinweis mindestens eines aus einem Soft-Stopp, einem Knüppelrüttler und einer Arretierung umfasst.

5. Verfahren (300) nach einem der Ansprüche 1 bis 4, wobei sich die Daten weiter auf ein gemessenes Gewicht des Luftfahrzeugs (10) beziehen.

6. Verfahren (300) nach einem der Ansprüche 1 bis 5, wobei sich die Daten weiter auf mindestens einen Pilotenbefehl beziehen.

7. Verfahren (300) nach einem der Ansprüche 1 bis 6, wobei der fühlbare Hinweis ausgewählt wird, um einen Piloten (202) zu unterstützen, das Luftfahrzeug (10) an einem optimalen Punkt innerhalb der Flugbereichsgrenze zu betreiben.

8. Verfahren (300) nach Anspruch 7, wobei der optimale Punkt innerhalb der Flugbereichsgrenze ausgewählt wird, um eine weiche Landung des Luftfahrzeugs (10) zu ermöglichen.

9. Vorrichtung, umfassend:

mindestens einen Prozessor (106); und

einen Speicher (102), in dem Anweisungen gespeichert sind, die, wenn sie von dem mindestens einen Prozessor (102) ausgeführt werden, die Vorrichtung veranlassen, ein Verfahren auszuführen, das Folgendes umfasst:

- Erhalten von Daten in Bezug auf mindestens: eine Sinkgeschwindigkeit eines Luftfahrzeugs und einen gemessenen Abstand des Luftfahrzeugs von mindestens einem aus einem Hindernis und der Erdoberfläche;

- Verarbeiten der Daten mit dem mindestens einen Prozessor, um eine Flugbereichsgrenze zu erhalten;

- Erzeugen eines Algorithmus für einen fühlbaren Hinweis zum Erzeugen eines Befehls für einen fühlbaren Hinweis, der der Flugbereichsgrenze entspricht, um auf ein Steuerorgan (210) angewandt zu werden;

- Feststellen durch den mindestens einen Prozessor, ob die Daten darauf hindeuten, dass die Sinkgeschwindigkeit einen ersten Grenzwert überschreitet, basierend darauf, dass der gemessene Abstand niedriger als ein zweiter Grenzwert ist; und

- Automatisieren einer Landung des Luftfahrzeugs (10) basierend auf der Feststellung.

**10.** Luftfahrzeug (10), umfassend:

einen ersten Sensor, der konfiguriert ist, um einen Abstand des Luftfahrzeugs (10) von mindestens einem aus einem Gegenstand und der Erdoberfläche zu messen;

einen zweiten Sensor, der konfiguriert ist, um eine Sinkgeschwindigkeit des Luftfahrzeugs (10) zu messen; und

ein Steuersystem, das eine Vorrichtung nach Anspruch 9 umfasst.

**11.** Luftfahrzeug (10) nach Anspruch 10, weiter umfassend:

einen dritten Sensor, der konfiguriert ist, um ein Gewicht des Luftfahrzeugs (10) zu messen, wobei das Steuersystem konfiguriert ist, um das gemessene Gewicht bei der Erhaltung der Flugbereichsgrenze zu verarbeiten.

**12.** Luftfahrzeug (10) nach Anspruch 10 oder 11, wobei das Steuerorgan (210) mit mindestens einem aus den folgenden Steuerorgangen verbunden ist: einem kollektiven, einem zyklischen und einem Gegenmomentpedal-Steuerorgan.

**13.** Luftfahrzeug (10) nach einem der Ansprüche 10 bis 12, wobei der fühlbare Hinweis ausgewählt wird, um eine weiche Landung des Luftfahrzeugs (10) zu ermöglichen.

**Revendications**

**1.** Procédé (300), comprenant :

l'obtention de données concernant au moins : une vitesse verticale de descente d'un aéronef et une distance mesurée de l'aéronef à au moins l'un parmi un obstacle et le sol ;

le traitement, par un dispositif de traitement, des données pour obtenir une enveloppe de vol ;

la génération d'un indice tactile correspondant à l'enveloppe de vol ;

l'application de l'indice tactile à un organe de commande (210) ;

**caractérisé en ce que** le procédé comprend en outre :

la détermination, par un dispositif de traitement, du fait que les données indiquent que la vitesse verticale de descente dépasse un premier seuil sur la base du fait que la distance mesurée est inférieure à un second seuil ; et

l'automatisation d'un atterrissage de l'aéronef (10) sur la base de la détermination.

**2.** Procédé (300) selon la revendication 1, dans lequel l'organe de commande (210) est associé à une ou plusieurs commandes de vol.

**3.** Procédé (300) selon la revendication 1 ou 2, dans lequel l'organe de commande (210) est associé à au moins l'un parmi : un levier de pas général, un manche à balai et un palonnier.

**4.** Procédé (300) selon l'une quelconque des revendications 1 à 3, dans lequel l'indice tactile comprend au moins l'un parmi une butée souple, un oscillateur de manche et un cran.

**5.** Procédé (300) selon l'une quelconque des revendications 1 à 4, dans lequel les données concernent en outre un poids mesuré de l'aéronef (10).

**6.** Procédé (300) selon l'une quelconque des revendications 1 à 5, dans lequel les données concernent en outre au moins une commande pilote.

**7.** Procédé (300) selon l'une quelconque des revendications 1 à 6, dans lequel l'indice tactile est sélectionné pour encourager un pilote (202) à commander l'aéronef (10) à un point optimal au sein de l'enveloppe de vol.

**8.** Procédé (300) selon la revendication 7, dans lequel le point optimal au sein de l'enveloppe de vol est sélectionné pour fournir un atterrissage en douceur de l'aéronef (10).

**9.** Appareil, comprenant :

au moins un processeur (106) ; et

une mémoire (102) ayant des instructions stockées sur celle-ci, lesquelles, lorsqu'elles sont exécutées par l'au moins un processeur (102) amènent l'appareil à exécuter un procédé comprenant :

- l'obtention de données concernant au moins : une vitesse verticale de descente d'un aéronef et une distance mesurée de l'aéronef à au moins l'un parmi un obstacle et le sol ;
- le traitement, par l'au moins un processeur, des données pour obtenir une enveloppe de vol ;
- la génération d'un algorithme d'indice tactile pour générer une commande d'indice tactile correspondant à l'enveloppe de vol en vue de son application à un organe de commande (210) ;
- la détermination, par l'au moins un processeur, du fait que les données indiquent que la vitesse verticale de descente dépasse un premier seuil sur la base du fait que la distance mesurée est inférieure à un second seuil ; et
- l'automatisation d'un atterrissage de l'aéronef (10) sur la base de la détermination.

10. Aéronef (10), comprenant :

un premier capteur configuré pour mesurer une distance de l'aéronef (10) à au moins l'un parmi un objet et le sol ;
un deuxième capteur configuré pour mesurer une vitesse verticale de descente de l'aéronef (10) ; et
un système de commande comprenant un appareil selon la revendication 9.

11. Aéronef (10) selon la revendication 10, comprenant en outre :

un troisième capteur configuré pour mesurer un poids de l'aéronef (10),
dans lequel le système de commande est configuré pour traiter le poids mesuré lors de l'obtention de l'enveloppe de vol.

12. Aéronef (10) selon la revendication 10 ou 11, dans lequel l'organe de commande (210) est associé à au moins l'un parmi : un levier de pas général, un manche à balai et un palonnier.

13. Aéronef (10) selon l'une quelconque des revendications 10 à 12, dans lequel l'indice tactile est sélectionné pour fournir un atterrissage en douceur de l'aéronef (10).

FIG. 1A

100

Memory
102

Program1
104a

Program2
104b

Processor
106

I/O device(s)
108

Database
110-1

Database
110-2

Database
110-n

FIG. 1B

200

210

Inceptors
Capable of
Providing
Tactile
Cuing

(6)

202

Pilot

(3)

206

Helicopter

(1)
Measured Weight

(5)

208

Proximity
Tactile Cueing
Algorithms

(4)

On-Board Model-
Based Closure
Algorithm

204

(2)

Measured Distance
to Obstacles/Ground

FIG. 2

300

```
┌─────────────────────┐
│    Obtain data      │
│        302          │
└─────────────────────┘
          │
          ▼
┌─────────────────────┐
│    Process data     │
│        304          │
└─────────────────────┘
          │
          ▼
┌─────────────────────┐
│    Filter data      │
│        306          │
└─────────────────────┘
          │
          ▼
┌─────────────────────┐
│  Generate profile   │
│        308          │
└─────────────────────┘
          │
          ▼
┌─────────────────────┐
│ Generate tactile cues│
│        310          │
└─────────────────────┘
          │
          ▼
┌─────────────────────┐
│ Apply tactile cues to│
│      inceptors      │
│        312          │
└─────────────────────┘
```

FIG. 3

**EP 2 937 283 B1**

**REFERENCES CITED IN THE DESCRIPTION**

**Patent documents cited in the description**

- US 2006071817 A
- US 2009266940 A
- US 2011202207 A
- US 2005151672 A
- US 3947809 A